(19) Europäisches Patentamt
European Patent Office
Office européen des brevets

(11) **EP 2 388 983 B1**

(12) **EUROPEAN PATENT SPECIFICATION**

(45) Date of publication and mention
of the grant of the patent:
**19.12.2012 Bulletin 2012/51**

(51) Int Cl.:
***H04M 11/06*** *(2006.01)*    ***H04B 3/32*** *(2006.01)*
***H04M 3/30*** *(2006.01)*

(21) Application number: **10305527.3**

(22) Date of filing: **18.05.2010**

(54) **Method for testing a component of a vectoring system and line termination equipment configured to carry out said method**

Verfahren zum Testen einer Komponente eines Vektorsystems und zur Durchführung des besagten Verfahrens konfiguriertes Leitungsabschlussgerät

Procédé pour tester un composant d'un système de vectorisation et équipement de terminaison de ligne pour effectuer ledit procédé

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**23.11.2011 Bulletin 2011/47**

(73) Proprietor: **Alcatel Lucent**
**75007 Paris (FR)**

(72) Inventors:
• **Peeters, Michael**
**2547, Lint (BE)**

• **Maes, Jochen**
**2431, Veerle (BE)**

(74) Representative: **ALU Antw Patent Attorneys**
**Copernicuslaan 50**
**2018 Antwerpen (BE)**

(56) References cited:
**EP-A1- 1 998 465      EP-A1- 2 056 548**
**US-A1- 2005 030 884**

## Description

**Field of Invention**

The present invention relates to line termination equipment such as digital subscriber line access multiplexers (DSLAMs) adapted to apply vectoring. In particular, the present invention relates to a method to test certain functions of vectoring systems comprising such line termination equipment. The testing may *inter alia* pertain to the DSLAM, Customer Premises Equipment (CPEs), or interoperability between such DSLAMs and such CPEs.

**Background**

Electronic wireline simulators have been developed to allow testing of wireline transmission equipment without having to resort to a "cable farm", i.e. a large collection of different types and lengths of cable over which the transmission capabilities can be tested. The known wireline simulators synthesize a circuit presenting a certain attenuation and phase distortion to the signals applied to it. In this way, a known wireline simulator adequately simulates a single piece of cable, the simulated length and type of which may be varied within a predetermined range. The known wireline simulators do not allow the simulation of crosstalk between multiple lines.

Modern digital subscriber line equipment, in particular ADSL and VDSL equipment, has the capability to perform "vectoring", i.e. to coordinate the signals transmitted on different lines using a crosstalk canceller, in such a way that the crosstalk between the different lines is substantially cancelled out by the signal components added to each original signal by the crosstalk canceller. To adequately and efficiently test a system comprising a digital subscriber line access multiplexer (DSLAM) with vectoring capabilities, it is desired to have the equivalent of a wireline simulator, with the ability to simulate multiple mutually coupled lines.

EP 1 998 465 A1 discloses a method and device for crosstalk evaluation of a channel, wherein the channel is represented and/or modeled by a multiple-input-multiple-output (MIMO) system connecting a first network component with at least one second network component. The MIMO system comprises first coefficients associated with transmission lines that are in particular associated with crosstalk, wherein said crosstalk comprises a near-end crosstalk (NEXT) portion and a far-end crosstalk (FEXT) portion. The method comprises the steps: the first network component sends a signal to one second network component; the far-end crosstalk portion and the near end crosstalk portion are evaluated.

EP 2 056 548 A1 discloses a method for jointly processing a plurality of signals to be transmitted over, or received from, respective ones of a plurality of transmission channels (12), and comprising the steps of: initializing a virtual channel matrix (P) based on interferences as measured between said plurality of transmission channels, jointly processing said plurality of signals through said virtual channel matrix. A method further comprises the steps of arranging said plurality of transmission channels into groups of transmission channels characterized by low inter-group interferences, restricting the initialization of said virtual channel matrix to intra-group interferences as measured within said respective groups of transmission channels. It also relates to a network unit, such as an access multiplexer, an optical network unit or a wireless base station.

US 2005/0030884 A1 discloses a crosstalk cancellation device that can process the signals causing the crosstalk interference and generate a crosstalk cancellation signal that can compensate for the crosstalk when applied to the channel receiving crosstalk interference. The crosstalk cancellation device can include a model of the crosstalk effect that generates a signal emulating the actual crosstalk both in form and in timing. The crosstalk cancellation device can include a controller that monitors crosstalk-compensated communication signals and adjusts the model to enhance crosstalk cancellation performance. The crosstalk cancellation device can have a mode of self configuration or calibration in which defined test signals can be transmitted on the crosstalk-generating channel and the crosstalk -receiving channel.

**Summary**

It is an object of the present invention to overcome the above mentioned shortcomings of the known wireline simulators.

According to a first aspect of the present invention, there is provided a method for testing a component of a vectoring system, the vectoring system comprising line termination equipment having a crosstalk canceller and network termination equipment attached to the line termination equipment, the method comprising: configuring the crosstalk canceller with a first set of crosstalk canceller parameters representing a simulated network, exchanging a first signal between the line termination equipment and the network termination equipment, the first signal being coded by the crosstalk canceller, obtaining at the line termination equipment information indicative of an error component in a received version of the first signal, and using the information to assess the operation of the component in the simulated network, wherein the component of the vectoring system is one of a vectoring function in the line termination equipment and a functionality of the network termination equipment.

It is an advantage of the method of the present invention that the function of a coupled multiline wireline simulator can be provided without using additional equipment, i.e. by using the line termination equipment itself as a wireline simulator operating completely in the digital domain. The terms "line termination equipment" and "line termination apparatus", as used in this application, are understood to designate *inter alia* a DSLAM, whether in a stand-alone, rack-based, cabinet-based or any other configuration, or a line card or set of commonly controlled line cards of such a DSLAM. When the term DSLAM is used, this is done without loss of generality, unless stated otherwise.

This goal can advantageously be achieved by initially programming the crosstalk canceller with a set of parameters that represents a set of lines with a certain degree of mutual crosstalk coupling, and, optionally, certain attenuation and/or phase distortion characteristics. Any signal transmitted (or received) by the line termination equipment will, on passing through the crosstalk canceller, undergo the same transformation as would be observed if the signal were to pass to the corresponding wireline network. By analyzing an error component on the received version of the code signal, it is possible to determine if the vectoring functions of a system component such as the DSLAM, more particularly its crosstalk canceller, or the CPE, or the overall system comprising DSLAM and CPE, operate correctly.

In an embodiment of the method of the present invention, the using of the information comprises determining at the line termination equipment a second set of crosstalk canceller parameters in function of the information, and verifying whether the second set of crosstalk canceller parameters substantially cancels the first set of crosstalk canceller parameters.

If the vectoring functions of the DSLAM, of the CPE or of the overall system comprising DSLAM and CPE, operate correctly, the verification step will reveal that the calculated crosstalk canceller parameters are capable of cancelling out the crosstalk that was artificially introduced by the first set of parameters. This second step can additionally be tested in situ.

In an embodiment of the method of the present invention, the verifying comprises obtaining the second set of crosstalk canceller parameters from the line termination equipment, and ascertaining whether the second set of crosstalk canceller parameters is substantially a matrix-inverse of the first set of crosstalk canceller parameters.

It is an advantage of this embodiment that the verification step can be performed off-line, after a large number of tests have been conducted.

In an embodiment of the method of the present invention, the verifying comprises: calculating a third set of crosstalk canceller parameters as a function of the first set of crosstalk canceller parameters and the second set of crosstalk canceller parameters; reconfiguring the crosstalk canceller with the third set of crosstalk canceller parameters; exchanging a second signal between the line termination equipment and the network termination equipment, the second signal being coded by said crosstalk canceller; and detecting an error component of the coded second signal.

It is an advantage of this embodiment that the verification can be carried out by using appropriate standardized customer premises equipment to terminate the lines under test. Such customer premises equipment is normally capable of measuring an error component in pilot signals transmitted by the DSLAM to configure the vectoring control entity. Such customer premises equipment is also generally capable of estimating the signal-to-noise ratio of a signal transmitted by the DSLAM.

In an embodiment of the method of the present invention, the crosstalk canceller comprises a precoder, the exchanging of the first signal comprises transmitting the first signal from the line termination equipment to the network termination equipment, and the error component is determined by the network termination equipment.

This embodiment implements the method of the present invention for use in the downstream channel.

In an embodiment of the method of the present invention, the crosstalk canceller comprises a postcoder, the exchanging of the second signal comprises transmitting the first signal from the network termination equipment to the line termination equipment, and the error component is determined by the line termination equipment.

This embodiment implements the method of the present invention for use in the upstream channel.

In an embodiment of the method of the present invention, the line termination equipment has a management interface for performing the configuring. In a particular embodiment, the management interface is adapted to received an instruction to select the first set of crosstalk canceller parameters from among a group of pre-stored sets of crosstalk canceller parameters. In a particular embodiment, the management interface is adapted to receive an instruction specifying attenuation and crosstalk coupling coefficients constituting the first set of crosstalk canceller parameters..

It is an advantage of this embodiment that the test procedure of the present invention can be carried out with a variety of simulated coupled wireline networks, represented by different sets of crosstalk cancelier parameters.

According to another aspect of the invention, there is provided a line termination; apparatus suitable for testing a component of a vectoring system, the line termination" apparatus being connectable to network termination equipment and comprising a crosstalk canceller adapted to be configured with a first set of crosstalk canceller parameters representing a simulated network, wherein the line termination apparatus is configured to exchange a first signal with the network termination equipment, the first signal being coded by the crosstalk canceller; obtain information indicative of an error component in a received version of the first signal; and use the information to assess the operation of the component in the simulated network, wherein the component of the vectoring system is one of a vectoring function in the line termination apparatus and a functionality of the network termination equipment.

In an embodiment, the line termination apparatus of the present invention is configured to determine a second set of crosstalk canceller parameters in function of the information and to verify whether the second set of crosstalk canceller parameters substantially cancels the first set of crosstalk canceller parameters.

In an embodiment, the line termination apparatus of the present invention is configured to ascertain whether the second set of crosstalk canceller parameters is substantially a matrix-inverse of the first set of crosstalk canceller parameters.

In an embodiment of the line termination apparatus of the present invention, the crosstalk canceller is further adapted to be reconfigured with a third set of crosstalk canceller parameters, the line termination apparatus being further configured to calculate the third set of crosstalk canceller parameters as a function of the first set of crosstalk canceller parameters and the second set of crosstalk canceller parameters; reconfigure the crosstalk canceller with the third set of crosstalk canceller parameters; exchange a second signal with the line termination equipment, the second signal being coded by the crosstalk canceller; and obtain a detected error component of the coded second signal.

In an embodiment of the line termination apparatus of the present invention, the crosstalk canceller comprises a precoder, wherein the line termination equipment is configured to exchange the first signal by transmitting the first signal to the network termination equipment, and to obtain the information from the network termination equipment.

In an embodiment of the line termination apparatus of the present invention, the crosstalk canceller comprises a postcoder, wherein the line termination apparatus is configured to exchange the first signal by receiving the first signal from the network termination equipment, and to obtain the information by analyzing the received version of the first signal.

In an embodiment, the line termination apparatus of the present invention further comprises a management interface adapted to receive an instruction to select the first set of crosstalk canceller parameters from among a group of pre-stored sets of crosstalk canceller parameters.

In an embodiment, the line termination apparatus of the present invention further comprises a management interface adapted to receive an instruction specifying attenuation and crosstalk coupling coefficients constituting the first set of crosstalk canceller parameters.

According to another aspect of the present invention, there is provided a program for a processor of a piece of line termination equipment having a crosstalk canceller, comprising instructions to carry out the method disclosed above.

The advantages of the line termination apparatus and the program according to the present invention, and their various embodiments, are equivalent to those described above for the corresponding method.

## Brief Description of the Figures

Some embodiments of apparatus and/or methods in accordance with embodiments of the present invention are now described, by way of example only, and with reference to the accompanying drawings, in which:

Figure 1 schematically illustrates a line termination apparatus according to the present invention;

Figure 2 presents a flow chart of an embodiment of the method according to the present invention; and

Figure 3 presents a flow chart of another embodiment of the method according to the present invention.

## Description of Embodiments

In this application, precoders, used to cancel crosstalk in transmitted downstream signals (from the DSLAM to the subscriber side), and postcoders, used to cancel crosstalk in received upstream signals (from the subscriber side to the DSLAM), are collectively referred to as crosstalk cancellers. Where, in the following description, statements are made about "precoders" or "postcoders", this is done without loss of generality, and these statements apply analogously to the respective counterpart, unless explicitly stated otherwise. Furthermore "exchanging" signals is intended to mean "receiving" or "transmitting" signals accordingly.

In a DSLAM with vectoring capabilities, the vectoring control entity (VCE) and the precoder are inherently multi-line systems. Testing of the functionalities of the VCE and precoder requires that crosstalk is present between the multiple lines. This cannot be performed by the known wireline simulators, even multi-line simulators, since they provide attenuation but do not deliberately introduce crosstalk between the lines. Test procedures of vectoring functionalities thus require a cable spool, and if multiple line lengths and gauges and so on are needed, an entire cable farm. Such real cable posed problems with repeatability of the tests: tests performed at vendor's premises may lead to different results as test performed at the customer's cable farm. Moreover, for acceptance without on-site testing, a significant measure of trust is derived from this repeatability.

The present invention is based *inter alia* on the insight that it is advantageous to provide a simulation of multiple coupled lines in the digital domain. It is further based on the insight that the precoder, available in every vectoring system, can advantageously be used as a crosstalk simulator.

One of the vectoring functionalities to be tested is crosstalk estimation algorithm (running in the VCE). This can be tested by setting the precoder coefficients such that a certain amount of crosstalk is introduced between the lines. These coefficients can be chosen randomly (based on statistics) or pre-defined (eg, the crosstalk channel matrix defined in the applicable standards). Also, direct channel coefficients may be set to mimic attenuation, or attenuation can be performed with known single-line simulators.

By making sure the crosstalk estimation algorithm is unaware of these coefficients, the functionality of the algorithm can be tested by letting it estimate the simulated channel, i.e., the set coefficients. The deviation from the coefficients is a measure of the accuracy of the VCE's algorithm.

In a normal crosstalk cancellation mode, the VCE would write the calculated coefficients into the precoder memory. This would destroy the 'line simulating' property of the VCE according to the invention. Hence, in the method of the invention, the calculated coefficients must either be read out and assessed independently, without moving to an operational stage of the vectoring function, or the VCE must be instructed to write cumulative coefficients into the precoder, consisting of the combined effect of the set of simulation coefficients and the set of calculated coefficients.

The signal-to-noise ratio or the error components of the signals that are transmitted from the DSLAM while the precoder is operating with these cumulative coefficients are metrics that may be used to assess the accuracy of the VCE's algorithm. In particular, a high signal-to-noise ratio, or a small error component, are indicative of a VCE that is operating well. Conversely, a low signal-to-noise ratio, or a large error component, are indicative of a VCE that is not operating well. When assessing signal-to-noise ratios or error components, due account should be taken of the contribution of the cabling and/or line simulators that connect the DSLAM to the network termination equipment.

Taking downstream as an example without loss of generality, on real cable, the vector of received signals y can be written as:

$$y = H \ x + u \qquad (1)$$

Where x is the vector of transmitted signals and H is the channel matrix of the real cable. The diagonal elements represent the direct channel (attenuation and phase rotation) while the off-diagonal components represent crosstalk values (again, amplitude and phase). In a vectored system, a precoder is introduced in the DSLAM that pre-distorts the signals X such that the vector of received signals appears undistorted (except for external noise u):

$$y = H \ P \ x + u = x + u.$$

The goal of a multi-line simulator is to replace the real cable H by a simulate channel matrix Hsim. The present invention simulates H within the DSLAM by setting precoder coefficients: P = Hsim, where Hsim is a random or fixed matrix introduced for testing vectoring functionalities and includes off-diagonal elements, and may include diagonal elements with a magnitude smaller than one. In a further stage, the calculated precoder coefficients P' are "added into" the precoder, wherein this addition may be a matrix multiplication, or, under the right approximating conditions, a matrix addition as expressed below:

$$y = P \ x + u = (Hsim + P') \ x + u \qquad (2)$$

A function that may be tested according to the method of the invention is the VCE's ability to estimate Hsim, which is observable by the extent to which (Hsim + P') approaches 1. Similarly, joining and leaving events, and tracking can be tested.

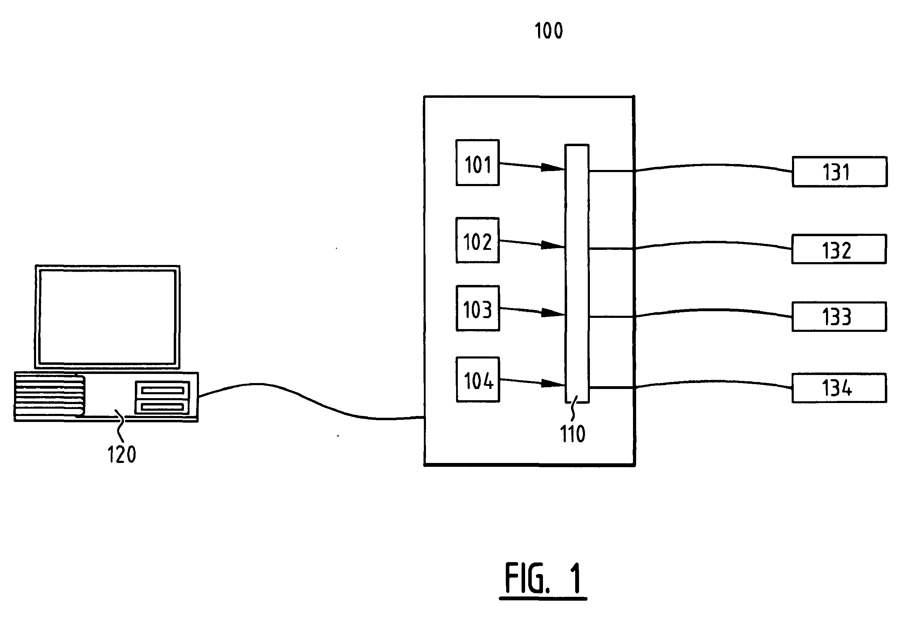

Figure 1 schematically illustrates a DSLAM **100**, comprising a precoder **110**, fed by four digital signal processors **101-104**, representing four digital subscriber lines. Four pieces of network termination equipment, preferably customer premises equipment **131-134,** are attached to ports of DSLAM **100**, by means of wires that preferably have extremely low attenuation. Optionally, a wireline simulator may be provided between DSLAM **100** and each of the pieces of customer premises equipment **131-134**. It shall be noted that the number of subscriber lines and DSLAM ports is arbitrarily chosen as four, for clarity of the figure, and shall not be considered to impose any limitation on the invention as claimed.

The DSLAM **100** further presents a management interface, to which a management station **120** is attached. In the set-up of Figure 1, operating in downstream vectoring mode, the precoder **110** receives signals, in particular sequences of constellations from each of the digital signal processors **101-104**, and mixes these signals by adding a scaled component of each of the various signals to each of the other signals, whereupon the vectored signals are transmitted through the ports of DSLAM **100**.

It is understood that in the known DSLAMs the precoder **110** will start out in a mode that introduces substantially no mixing between the various signals, and will then assess the error components reported by the customer premises equipment **131-134**, to estimate the cross-talk characteristics of the wireline network, and to update the precoder coefficients so as to minimize the perceived cross-talk at the receiving end. In the operation of the known vectoring DSLAMs, this happens without intervention from a management agent. In embodiments of the DSLAM of the present invention, a management station **120** is used to program precoder **110** with the predetermined simulation parameters, and to take the necessary steps to either read out the calculated precoder coefficients resulting from the simulation set-up, or to continue into a modified vectoring mode in which the precoder is reprogrammed with a combined set of precoder coefficients, derived from both the original simulation set and the calculated set. A testing procedure can be carried out according to the methods as described above.

It shall be understood that the DSLAM **100** of Figure 1 may additionally or alternatively comprise a postcoder, for performing crosstalk cancellation in the upstream path. The resulting DSLAM presents the same structure as the one described before, and may be clarified by means of the same Figure 1. DSLAM **100** comprises a postcoder **110**, feeding into four digital signal processors **101-104**, representing four digital subscriber lines. Four pieces of network termination equipment, preferably customer premises equipment **131-134**, are attached to ports of DSLAM **100**, by means of wires that preferably have extremely low attenuation. Optionally, a wireline simulator may be provided between DSLAM **100** and each of the pieces of customer premises equipment **131-134**.

In the set-up of Figure 1, operating in upstream vectoring mode, the precoder **110** receives signals, in particular sequences of constellations from each of the subscriber lines to which customer premises equipment **131-134** are attached, and unmixes these signals by adding a scaled component of each of the various signals to each of the other signals, whereupon the vectored signals are provided to the digital signal processors **101-104**. The DSLAM **100** is capable of determining an error component in the signal received from the postcoder **110**.

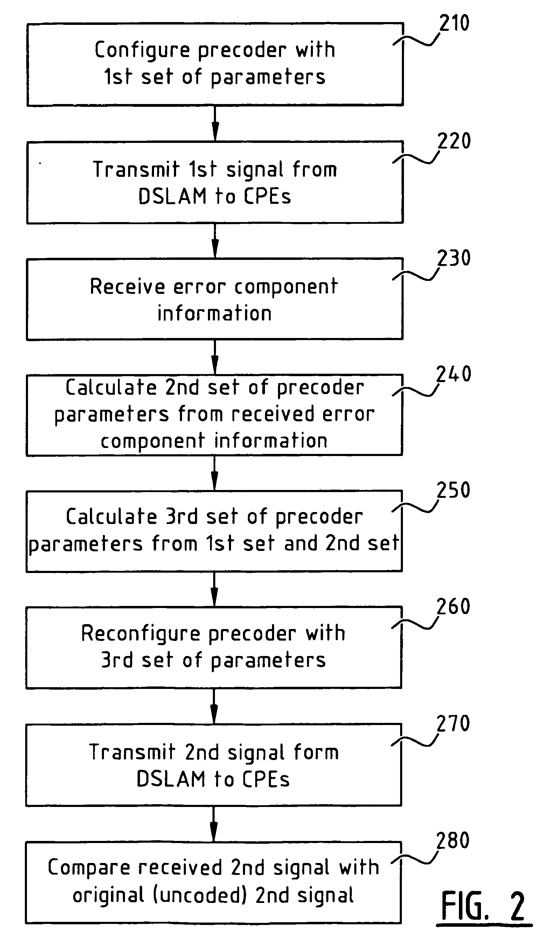

Figure 2 provides a flow chart of an embodiment of the method of the present invention. In a first step **210** the precoder **110** is configured with a first step of parameters, which represent s certain multiline network with crosstalk coupling between the various lines. Considering the precoder coefficients as a matrix, such coupling between the lines is represented by non-zero values in off-diagonal positions of the matrix. Obviously, the values of the various coefficients of the matrix may be chosen so as to also represent a certain amount of attenuation and/or phase distortion.

The configuration of the precoder **110** preferably takes place by a management agent **120** via an appropriate management interface. As the precoder coefficients to be used in standardized tests will typically be identical to those published in testing standards, it is advantageous to provide a management interface that allows selecting a given preprogrammed set of precoder coefficients for the test to be carried out. Alternatively or additionally, the management interface may allow inputting the actual precoder coefficient values to allow additional tests, in particular customized tests, to address particular operational situations. Typically, the management interface will also allow selecting the lines of the DSLAM **100** on which the test is to be run.

Next, the VCE of DSLAM **100** will be allowed to carry out its algorithm for estimating the cross-talk channel, and for calculating the appropriate precoder coefficients that cancel the estimated cross-talk to the best possible extent. To perform these functions, the VCE will first cause the DSLAM **100** to transmit a first signal though the precoder to the attached network terminating equipment **131-134** in step **220**. The attached network terminating equipment **131-134** may advantageously be standardized customer premises equipment, which is capable of determining an error component in a received signal, in particular a pilot signal. The customer premises equipment **131-134** is also capable of estimating the signal to noise ratio in a received signal. Having measured this error component, the customer premises equipment will inform the DSLAM **100** of its measurement, typically by means of a dedicated management message, in step **230**. The error components so received from the different pieces of customer premises equipment **131-134** on the different respective lines, will allow the VCE to estimate the cross-talk channel. On the basis of this information, the VCE will calculate in step **240** a second set of precoder parameters, which is the set that would be adopted to cancel the cross-talk in a network as simulated by the first set.

In order to assess the quality of the overall vectoring system, or sub-functionalities thereof such as the VCE's algorithm, it is now necessary to determine the adequacy of the second set of precoder parameters. This may be done by reading out the calculated precoder parameters from the DSLAM **100** via an appropriate management interface and comparing them to the first set of precoder parameters that was used for the simulation. In particular, the comparison should be carried out so as to reveal whether the calculated set would adequately cancel the cross-talk represented by the simulation set. In terms of matrices, the matrix of the first set of precoder coefficients and the matrix of the second set of precoder coefficients should substantially be each other's inverse, i.e., they should result in a unity matrix after matrix multiplication. Unintentional crosstalk in the path between precoder and CPE, such as through cabling, may determine the extent to which the matrix multiplication results in a unity matrix.

A person skilled in the art will appreciate that various metrics may be used to quantify the amount in which the calculated set of parameters deviates from the matrix that would allow perfect cross-talk cancelation.

As an alternative to extracting the calculated parameter set from the DSLAM **100** and applying a comparison to it, it is advantageous to let the DSLAM **100** operate in a normal vectoring mode, using a set of precoder coefficients that is a combination of the first set of coefficients and the second set of coefficients. When the precoder **110** operates using this third set of coefficients, it effectively acts at once as a multiline wireline simulator and as a cross-talk cancelation engine. In the ideal case, the resulting signals transmitted by the DSLAM **100** through the precoder **110**, should be completely free from cross-talk.

The extent to which the precoder approaches this ideal case, may be assessed by transmitting a second signal from the DSLAM **100** to the attached network termination equipment **131-134** in step **270**, and by determining an error component in the signal received at the network termination equipment **131-134** in step **280**. The extent to which the precoder approaches the ideal case may be quantified by comparing performance metrics of a line in step **270-280** with the performance metrics of that line when no other lines are active, and hence no crosstalk is present.

As indicated before, standardized customer premises equipment may be used to terminate the network, which has the advantage that this equipment's ability to detect an error component, or to estimate a signal to noise ratio, may be used to assess the quality of the coded signal. As can be understood, a signal received at the customer premises equipment with a very small error component or a corresponding high signal to noise ratio, will be indicative of a good operation of the precoding engine, while a signal received at the customer premises equipment, with a large error component or a correspondingly low signal to noise ratio, will be indicative of less good operation of the vectoring engine.

Hence, the method of the present invention provides a way to use a DSLAM in a partial self-test mode, to determine the proper operation of the vectoring functions in that DSLAM.

Alternatively or additionally, the method described above may be used for testing the functionalities of standardized customer premises equipment or the interoperability of standardized customer premises equipment with the DSLAM. Apart from functional tests, the method described above can also be used for performance tests.

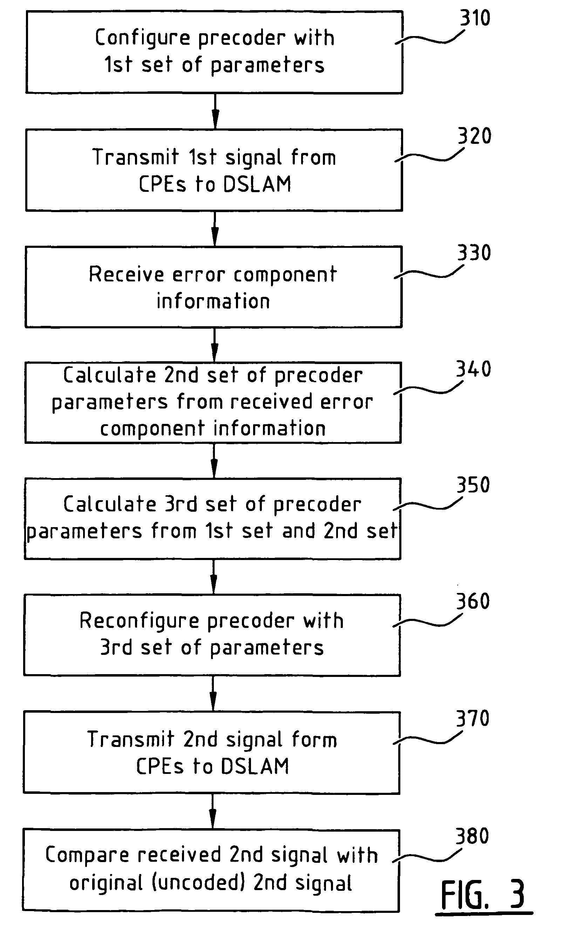

The method described above may also be used for testing a vectoring algorithm applied to upstream signals. Figure 3 provides a flowchart of an embodiment of the method according to the present invention, applied to upstream signals. The method is carried out in an analogous manner as for vectoring applied to downstream signals; specific details described above in the context of Figure 2 may be applied to the method of Figure 3 and will not be repeated here.

The postcoder **110** is initially programmed in step **310** with a first set of postcoder parameters, which represent a network topology with a certain amount of crosstalk. A first set of signals, preferably pilot signals, is transmitted from the network termination equipment **131-134** to the DSLAM **100** in step **320**. Error component information is determined at the DSLAM in step **330**, and a second set of postcoder parameters is calculated on the basis of that information in step **340**. The second, calculated set of postcoder parameters may be assessed as such, as described before, or it may be merged into the postcoder **110** by calculating a third set of precoder parameters on the basis of the first and the second sets, in step **350**. The postcoder **110** is then reconfigured with the third set of parameters. A second set of signals, preferably pilot signals, is transmitted from the network termination equipment **131-134** to the DSLAM **100** in step **370**. On the basis of the received version of the second set of signals, which has passed through the postcoder **110**, the quality of the postcoder operation can be judged. In particular, the received version of the second set of signals is compared to the expected or original version of these signals in step **380**. This comparing may consist of determining an error component or a signal-to-noise ratio.

Embodiments of the present invention relate to line termination apparatus, such as DSLAMs, line termination cards, or sets of line termination cards, configured to carry out the relevant steps of the methods described above.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

### Claims

1. A method for testing a component of a vectoring system, said vectoring system comprising a line termination equipment (100) having a crosstalk canceller and a network termination equipment (131-134) attached to said line termination equipment (100), the method comprising:

- configuring (210) said crosstalk canceller with a first set of crosstalk canceller parameters representing a simulated network;
- exchanging (220) a first signal between said line termination equipment (100) and said network termination equipment (131-134), said first signal being coded by said crosstalk canceller;
- obtaining (230) at said line termination equipment (100) information indicative of an error component in a received version of said first signal; and
- using (240; 250; 260; 270; 280) said information to assess the operation of said component in said simulated network;

wherein said component of said vectoring system is one of a vectoring function in said line termination equipment (100) and a functionality of said network termination equipment (131-134).

2. The method of claim 1, wherein said using of said information comprises:

- determining (240) at said line termination equipment (100) a second set of crosstalk canceller parameters in function of said information; and
- verifying (250; 260; 270; 280) whether said second set of crosstalk canceller parameters substantially cancels said first set of crosstalk canceller parameters.

3. The method of claim 2, wherein said verifying comprises obtaining said second set of crosstalk canceller parameters from said line termination equipment (100), and ascertaining whether said second set of crosstalk canceller parameters is substantially a matrix-inverse of said first set of crosstalk canceller parameters.

4. The method of claim 2, wherein said verifying comprises:

- calculating (250) a third set of crosstalk canceller parameters as a function of said first set of crosstalk canceller parameters and said second set of crosstalk canceller parameters;
- reconfiguring (260) said crosstalk canceller with said third set of crosstalk canceller parameters;
- exchanging (270) a second signal between said line termination equipment (100) and said network termination equipment (131-134), said second signal being coded by said crosstalk canceller; and
- detecting (280) an error component of said coded second signal.

5. The method of any of claims 1-4, wherein said crosstalk canceller comprises a precoder (110), wherein said exchanging of said first signal comprises transmitting (220) said first signal from said line termination equipment (100) to said network termination equipment (131-134), and wherein said error component is determined by said network termination equipment (131-134).

6. The method of any of claims 1-4, wherein said crosstalk canceller comprises a postcoder, wherein said exchanging of said first signal comprises transmitting said first signal from said network termination equipment (131-134) to said line termination equipment (100), and wherein said error component is determined by said line termination equipment (100).

7. The method of any of the preceding claims, wherein said line termination equipment (100) has a management interface for performing said configuring (210), said management interface being adapted to receive an instruction to select said first set of crosstalk canceller parameters from among a group of pre-stored sets of crosstalk canceller parameters.

8. The method of any of the preceding claims, wherein said line termination equipment (100) has a management interface for performing said configuring (210), said management interface being adapted to receive an instruction specifying attenuation and crosstalk coupling coefficients constituting said first set of crosstalk canceller parameters.

9. A line termination apparatus (100) suitable for testing a component of a vectoring system, said line termination apparatus (100) being connectable to network termination equipment (131-134) and comprising a crosstalk canceller adapted to be configured (210) with a first set of crosstalk canceller parameters representing a simulated network, wherein said line termination apparatus (100) is configured to:

- exchange (220) a first signal with said network termination equipment, said first signal being coded by said crosstalk canceller;

- obtain (230) information indicative of an error component in a received version of said first signal; and
- use (240; 250; 260; 270; 280) said information to assess the operation of said component in said simulated network;

wherein said component of said vectoring system is one of a vectoring function in said line termination apparatus (100) and a functionality of said network termination equipment (131-134).

10. The line termination apparatus (100) of claim 9, configured to determine (280) a second set of crosstalk canceller parameters in function of said information and to verify (250; 260; 270; 280) whether said second set of crosstalk canceller parameters substantially cancels said first set of crosstalk canceller parameters.

11. The line termination apparatus (100) of claim 10, configured to ascertain whether said second set of crosstalk canceller parameters is substantially a matrix-inverse of said first set of crosstalk canceller parameters.

12. The line termination apparatus (100) of claim 10, wherein said crosstalk canceller is further adapted to be reconfigured with a third set of crosstalk canceller parameters, said line termination apparatus being further configured to:

- calculate (250) said third set of crosstalk canceller parameters as a function of said first set of crosstalk canceller parameters and said second set of crosstalk canceller parameters;
- reconfigure (260) said crosstalk canceller with said third set of crosstalk canceller parameters;
- exchange (270) a second signal with said network termination equipment, said second signal being coded by said crosstalk canceller; and
- obtain (280) a detected error component of said coded second signal.

13. The line termination apparatus (100) of any of claims 9-12, wherein said crosstalk canceller comprises a precoder (110), wherein said line termination apparatus is (100) configured to exchange (220) said first signal by transmitting said first signal to said network termination equipment (131-134), and to obtain (230) said information from said network termination equipment (131-134).

14. The line termination apparatus (100) of any of claims 9-12, wherein said crosstalk canceller comprises a postcoder, wherein said line termination apparatus (100) is configured to exchange said first signal by receiving said first signal from said network termination equipment (131-134), and to obtain said information by analyzing said received version of said first signal.

15. The line termination apparatus (100) of any of claims 9-14, further comprising a management interface adapted to receive an instruction to select said first set of crosstalk canceller parameters from among a group of pre-stored sets of crosstalk canceller parameters.

16. The line termination apparatus (100) of any of claims 9-15, further comprising a management interface adapted to receive an instruction specifying attenuation and crosstalk coupling coefficients constituting said first set of crosstalk canceller parameters.

17. A program for a processor of a piece of line termination equipment (100) having a crosstalk canceller, the program comprising instructions to carry out the method of any of claims 1-8.

**Patentansprüche**

1. Verfahren zum Testen einer Komponente eines Vektorsystems, wobei das besagte Vektorsystem ein Leitungsabschlussgerät (100) mit einem Übersprechkompensator und ein mit dem besagten Leitungsabschlussgerät (100) verbundenes Netzwerkabschlussgerät (131-134) umfasst, wobei das Verfahren umfasst:

- Konfigurieren (210) des besagten Übersprechkompensators mit einem ersten Satz von Übersprechkompensator-Parametern, welche ein simuliertes Netzwerk darstellen;
- Austauschen (220) eines ersten Signals zwischen dem besagten Leitungsabschlussgerät (100) und dem besagten Netzwerkabschlussgerät (131-134), wobei das besagte erste Signal von dem besagten Übersprechkompensator codiert wird;
- Einholen (230), an dem besagten Leitungsabschlussgerät (100), von Informationen, die für eine Fehlerkomponente in einer empfangenen Version des besagten ersten Signals indikativ sind; und
- Verwenden (240; 250; 260; 270; 280) der besagten Informationen, um den Betrieb der besagten Komponente in dem besagten simulierten Netzwerk zu beurteilen;

wobei die besagte Komponente des besagten Vektorsystems entweder eine Vektorfunktion in dem besagten Leitungsabschlussgerät (100) oder eine Funktionalität des besagten Netzwerkabschlussgeräts (131-134) ist.

2. Verfahren nach Anspruch 1, wobei das Verwenden der besagten Informationen umfasst:

- Ermitteln (240), an dem besagten Leitungsabschlussgerät (100), eines zweiten Satzes von Übersprechkompensator-Parametern in Abhängigkeit von den besagten Informationen; und
- Überprüfen (250; 260; 270; 280), ob der besagte zweite Satz von Übersprechkompensator-Parametern im Wesentlichen den besagten ersten Satz von Übersprechkompensator-Parametern kompensiert.

3. Verfahren nach Anspruch 2, wobei das besagte Überprüfen das Einholen des besagten zweiten Satzes von Übersprechkompensator-Parametern von dem besagten Leitungsabschlussgerät (100) und das Feststellen, ob der besagte zweite Satz von Übersprechkompensator-Parametern im Wesentlichen eine Matrixumkehrung des besagten ersten Satzes von Übersprechkompensator-Parametern ist, umfasst.

4. Verfahren nach Anspruch 2, wobei das besagte Überprüfen umfasst:

- Berechnen (250) eines dritten Satzes von Übersprechkompensator-Parametern in Abhängigkeit von dem besagten ersten Satz von Übersprechkompensator-Parametern und dem besagten zweiten Satz von Übersprechkompensator-Parametern;
- Rekonfigurieren (260) des besagten Übersprechkompensators mit dem besagten dritten Satz von Übersprechkompensator-Parametern;
- Austauschen (270) eines zweiten Signals zwischen dem besagten Leitungsabschlussgerät (100) und dem besagten Netzwerkabschlussgerät (131-134), wobei das besagte zweite Signal von dem besagten Übersprechkompensator codiert wird; und
- Erfassen (280) einer Fehlerkomponente des besagten codierten zweiten Signals.

5. Verfahren nach einem beliebigen der Ansprüche 1-4, wobei der besagte Übersprechkompensator einen Vorcodierer (110) umfasst, wobei das besagte Austauschen des besagten ersten Signals das Übertragen (220) des besagten ersten Signals von dem besagten Leitungsabschlussgerät (100) an das besagte Netzwerkabschlussgerät (131-134) umfasst, und wobei die besagte Fehlerkomponente durch das besagte Netzwerkabschlussgerät (131-134) ermittelt wird.

6. Verfahren nach einem beliebigen der Ansprüche 1-4, wobei der besagte Übersprechkompensator einen Nachcodierer umfasst, wobei das besagte Austauschen des besagten ersten Signals das Übertragen des besagten ersten Signals von dem besagten Netzwerkabschlussgerät (131-134) an das besagte Leitungsabschlussgerät (100) umfasst, und wobei die besagte Fehlerkomponente durch das besagte Leitungsabschlussgerät (100) ermittelt wird.

7. Verfahren nach einem beliebigen der vorstehenden Ansprüche, wobei das besagte Leitungsabschlussgerät (100) eine Verwaltungsschnittstelle zum Durchführen der besagten Konfiguration (210) aufweist, wobei die besagte Verwaltungsschnittstelle dazu ausgelegt ist, einen Befehl zum Auswählen des besagten ersten Satzes von Übersprechkompensator-Parametern aus einer Gruppe von vorgespeicherten Sätzen von Übersprechkompensator-Parametern zu empfangen.

8. Verfahren nach einem beliebigen der vorstehenden Ansprüche, wobei das besagte Leitungsabschlussgerät (100) eine Verwaltungsschnittstelle zum Durchführen der besagten Konfiguration (210) aufweist, wobei die besagte Verwaltungsschnittstelle dazu ausgelegt ist, einen Befehl, welcher die Dämpfungs- und Übersprechkopplungskoeffizienten, die den besagten ersten Satz von Übersprechkompensator-Parametern bilden, festlegt, zu empfangen.

9. Leitungsabschlussgerät (100), geeignet zum Testen einer Komponente eines Vektorsystems, wobei das besagte Leitungsabschlussgerät (100) an ein Netzwerkabschlussgerät (131-134) anschließbar ist und einen Übersprechkompensator umfasst, der dazu ausgelegt ist, mit einem ersten Satz von Übersprechkompensator-Parametern, welche ein simuliertes Netzwerk darstellen, konfiguriert (210) zu werden, wobei das besagte Leitungsabschlussgerät (100) konfiguriert ist für

- das Austauschen (220) eines ersten Signals mit dem besagten Netzwerkabschlussgerät, wobei das besagte erste Signal durch den besagten Übersprechkompensator codiert wird;
- das Einholen (230) von Informationen, die für eine Fehlerkomponente in einer empfangenen Version des besagten ersten Signals indikativ sind; und
- das Verwenden (240; 250; 260; 270; 280) der besagten Informationen, um den Betrieb der besagten Komponente in dem besagten simulierten Netzwerk zu beurteilen;

wobei die besagte Komponente des besagten Vektorsystems entweder eine Vektorfunktion in dem besagten Leitungsabschlussgerät (100) oder eine Funktionalität des besagten Netzwerkabschlussgeräts (131-134) ist.

10. Leitungsabschlussgerät (100) nach Anspruch 9, konfiguriert für das Ermitteln (280) eines zweiten Satzes von Übersprechkompensator-Parametern in Abhängigkeit von den besagten Informationen, und für das Überprüfen (250; 260; 270; 280), ob der besagte zweite Satz von Übersprechkompensator-Parametern im Wesentlichen den besagten ersten Satz von Übersprechkompensator-Parametern kompensiert.

11. Leitungsabschlussgerät (100) nach Anspruch 10, konfiguriert für das Feststellen, ob der besagte zweite Satz von Übersprechkompensator-Parametern im Wesentlichen eine Matrixumkehrung des besagten ersten Satzes von Übersprechkompensator-Parametern ist.

12. Leitungsabschlussgerät (100) nach Anspruch 10, wobei der besagte Übersprechkompensator weiterhin dazu ausgelegt ist, mit einem dritten Satz von Übersprechkompensator-Parametern rekonfiguriert zu werden, wobei das besagte Leitungsabschlussgerät weiterhin konfiguriert ist für

- das Berechnen (250) des besagten dritten Satzes von Übersprechkompensator-Parametern in Abhängigkeit von dem besagten ersten Satz von Übersprechkompensator-Parametern und dem besagten zweiten Satz von Übersprechkompensator-Parametern;
- das Rekonfigurieren (260) des besagten Übersprechkompensators mit dem besagten dritten Satz von Übersprechkompensator-Parametern;
- das Austauschen (270) eines zweiten Signals mit dem besagten Netzwerkabschlussgerät, wobei das besagte zweite Signal durch den besagten Übersprechkompensator codiert wird; und
- das Einholen (280) einer erfassten Fehlerkomponente des besagten codierten zweiten Signals.

13. Leitungsabschlussgerät (100) nach einem beliebigen der Ansprüche 9-12, wobei der besagte Übersprechkompensator einen Vorcodierer (110) umfasst, wobei das besagte Leitungsabschlussgerät (100) für das Austauschen (220) des besagten ersten Signals durch Übertragen des besagten ersten Signals an das besagte Netzwerkabschlussgerät (131-134) und für das Einholen (230) der besagten Informationen von dem besagten Netzwerkabschlussgerät (131-134) konfiguriert ist.

14. Leitungsabschlussgerät (100) nach einem beliebigen der Ansprüche 9-12, wobei der besagte Übersprechkompensator einen Nachcodierer umfasst, wobei das besagte Leitungsabschlussgerät (100) für das Austauschen des besagten ersten Signals durch Empfangen des besagten ersten Signals von dem besagten Netzwerkabschlussgerät (131-134) und für das Einholen der besagten Informationen durch Analysieren der besagten empfangenen Version des besagten ersten Signals konfiguriert ist.

15. Leitungsabschlussgerät (100) nach einem beliebigen der Ansprüche 9-14, weiterhin umfassend eine Verwaltungsschnittstelle, welche dazu ausgelegt ist, einen Befehl zum Auswählen des besagten ersten Satzes von Übersprechkompensator-Parametern aus einer Gruppe von vorgespeicherten Sätzen von Übersprechkompensator-Parametern zu empfangen.

16. Leitungsabschlussgerät (100) nach einem beliebigen der Ansprüche 9-15, weiterhin umfassend eine Verwaltungsschnittstelle, welche dazu ausgelegt ist, einen Befehl, welcher die Dämpfungs- und Übersprechkopplungskoeffizienten, die den besagten ersten Satz von Übersprechkompensator-Parametern bilden, festlegt, zu empfangen.

17. Programm für einen Prozessor eines Leitungsabschlussgeräts (100) mit einem Übersprechkompensator, wobei das Programm Befehle für das Durchführen des Verfahrens gemäß einem beliebigen der Ansprüche 1-8 enthält.

**Revendications**

1. Procédé pour tester une composante d'un système de vectorisation, ledit système de vectorisation comprenant un équipement de terminaison de ligne (100) présentant un dispositif d'annulation de diaphonie et un équipement de terminaison de réseau (131-134) relié audit équipement de terminaison de ligne (100), le procédé comprenant les étapes suivantes :

   - configurer (210) ledit dispositif d'annulation de diaphonie avec un premier ensemble de paramètres de dispositif d'annulation de diaphonie représentant un réseau simulé ;
   - échanger (220) un premier signal entre ledit équipement de terminaison de ligne (100) et ledit équipement de terminaison de réseau (131-134), ledit premier signal étant codé par ledit dispositif d'annulation de diaphonie ;
   - obtenir (230) au niveau dudit équipement de terminaison de ligne (100) des informations indiquant une composante d'erreur dans une version reçue dudit premier signal ; et
   - utiliser (240 ; 250 ; 260 ; 270 ; 280) lesdites informations pour évaluer l'opération de ladite composante dans ledit réseau simulé ;

   dans lequel ladite composante dudit système de vectorisation est une fonction de vectorisation dans ledit équipement de terminaison de ligne (100) ou une fonctionnalité dudit équipement de terminaison de réseau (131-134).

2. Procédé selon la revendication 1, dans lequel ladite utilisation desdites informations comprend les étapes suivantes :

   - déterminer (240) au niveau dudit équipement de terminaison de ligne (100) un deuxième ensemble de paramètres de dispositif d'annulation de diaphonie en fonction desdites informations ; et
   - vérifier (250 ; 260 ; 270 ; 280) si ledit deuxième ensemble de paramètres de dispositif d'annulation de diaphonie annule sensiblement ledit premier ensemble de paramètres de dispositif d'annulation de diaphonie.

3. Procédé selon la revendication 2, dans lequel ladite vérification comprend l'obtention dudit deuxième ensemble de paramètres de dispositif d'annulation de diaphonie dudit équipement de terminaison de ligne (100), et la détermination que ledit deuxième ensemble de paramètres de dispositif d'annulation de diaphonie est sensiblement un inverse de la matrice dudit premier ensemble de paramètres de dispositif d'annulation de diaphonie.

4. Procédé selon la revendication 2, dans lequel ladite vérification comprend les étapes suivantes :

   - calculer (250) un troisième ensemble de paramètres de dispositif d'annulation de diaphonie en fonction dudit premier ensemble de paramètres de dispositif d'annulation de diaphonie et dudit deuxième ensemble de paramètres de dispositif d'annulation de diaphonie ;
   - reconfigurer (260) ledit dispositif d'annulation de diaphonie avec ledit troisième ensemble de paramètres de dispositif d'annulation de diaphonie ;
   - échanger (270) un deuxième signal entre ledit équipement de terminaison de ligne (100) et ledit équipement de terminaison de réseau (131-134), ledit deuxième signal étant codé par ledit dispositif d'annulation de diaphonie ; et
   - détecter (280) une composante d'erreur dudit deuxième signal codé.

5. Procédé selon l'une quelconque des revendications 1-4, dans lequel ledit dispositif d'annulation de diaphonie comprend un précodeur (110), dans lequel ledit échange dudit premier signal comprend la transmission (220) dudit premier signal depuis ledit équipement de terminaison de ligne (100) vers ledit équipement de terminaison de réseau (131-134), et dans lequel ladite composante d'erreur est déterminée par ledit équipement de terminaison de réseau (131-134).

6. Procédé selon l'une quelconque des revendications 1-4, dans lequel ledit dispositif d'annulation de diaphonie comprend un postcodeur (110), dans lequel ledit échange dudit premier signal comprend la transmission dudit premier signal depuis ledit équipement de terminaison de réseau (131-134) vers ledit équipement de terminaison de ligne (100), et dans lequel ladite composante d'erreur est déterminée par ledit équipement de terminaison de ligne (100).

7. Procédé selon l'une quelconque des revendications précédentes, dans lequel ledit équipement de terminaison de ligne (100) présente une interface de gestion pour exécuter ladite configuration (210), ladite interface de gestion étant adaptée pour recevoir une instruction pour sélectionner ledit premier ensemble de paramètres de dispositif d'annulation de diaphonie parmi un groupe d'ensembles pré-stockés de paramètres de dispositif d'annulation de diaphonie.

8. Procédé selon l'une quelconque des revendications précédentes, dans lequel ledit équipement de terminaison de ligne (100) présente une interface de gestion pour exécuter ladite configuration (210), ladite interface de gestion étant adaptée pour recevoir une instruction spécifiant des coefficients d'atténuation et de couplage de diaphonie constituant ledit premier ensemble de paramètres de dispositif d'annulation de diaphonie.

9. Appareil de terminaison de ligne (100) adapté pour tester une composante d'un système de vectorisation, ledit appareil de terminaison de ligne (100) pouvant être connecté à un équipement de terminaison de réseau (131-134) et comprenant un dispositif d'annulation de diaphonie adapté pour être configuré (210) avec un premier ensemble de paramètres de dispositif d'annulation de diaphonie représentant un réseau simulé, ledit appareil de terminaison de ligne (100) étant configuré pour :

- échanger (220) un premier signal avec ledit équipement de terminaison de réseau, ledit premier signal étant codé par ledit dispositif d'annulation de diaphonie ;
- obtenir (230) des informations indiquant une composante d'erreur dans une version reçue dudit premier signal ; et
- utiliser (240 ; 250 ; 260 ; 270 ; 280) lesdites informations pour évaluer l'opération de ladite composante dans ledit réseau simulé ;

dans lequel ladite composante dudit système de vectorisation est une fonction de vectorisation dans ledit appareil de terminaison de ligne (100) ou une fonctionnalité dudit équipement de terminaison de réseau (131-134).

10. Appareil de terminaison de ligne (100) selon la revendication 9, configuré pour déterminer (280) un deuxième ensemble de paramètres de dispositif d'annulation de diaphonie en fonction desdites informations et pour vérifier (250 ; 260 ; 270 ; 280) si ledit deuxième ensemble de paramètres de dispositif d'annulation de diaphonie annule sensiblement ledit premier ensemble de paramètres de dispositif d'annulation de diaphonie.

11. Appareil de terminaison de ligne (100) selon la revendication 10, configuré pour déterminer si ledit deuxième ensemble de paramètres de dispositif d'annulation de diaphonie est sensiblement un inverse de la matrice dudit premier ensemble de paramètres de dispositif d'annulation de diaphonie.

12. Appareil de terminaison de ligne (100) selon la revendication 10, dans lequel ledit dispositif d'annulation de diaphonie est en outre adapté pour être reconfiguré avec un troisième ensemble de paramètres de dispositif d'annulation de diaphonie, ledit appareil de terminaison de ligne étant en outre configuré pour :

- calculer (250) ledit troisième ensemble de paramètres de dispositif d'annulation de diaphonie en fonction dudit premier ensemble de paramètres de dispositif d'annulation de diaphonie et dudit deuxième ensemble de paramètres de dispositif d'annulation de diaphonie ;
- reconfigurer (260) ledit dispositif d'annulation de diaphonie avec ledit troisième ensemble de paramètres de dispositif d'annulation de diaphonie ;
- échanger (270) un deuxième signal avec ledit équipement de terminaison de réseau, ledit deuxième signal étant codé par ledit dispositif d'annulation de diaphonie ; et
- obtenir (280) une composante d'erreur détectée dudit deuxième signal codé.

13. Appareil de terminaison de ligne (100) selon l'une quelconque des revendications 9-12, dans lequel ledit dispositif d'annulation de diaphonie comprend un précodeur (110), ledit appareil de terminaison de ligne (100) étant configuré pour échanger (220) ledit premier signal en transmettant ledit premier signal audit équipement de terminaison de réseau (131-134), et pour obtenir (230) lesdites informations dudit équipement de terminaison de réseau (131-134).

14. Appareil de terminaison de ligne (100) selon l'une quelconque des revendications 9-12, dans lequel ledit dispositif d'annulation de diaphonie comprend un postcodeur, ledit appareil de terminaison de ligne (100) étant configuré pour échanger ledit premier signal en recevant ledit premier signal dudit équipement de terminaison de réseau (131-134), et pour obtenir lesdites informations en analysant ladite version reçue dudit premier signal.

15. Appareil de terminaison de ligne (100) selon l'une quelconque des revendications 9-14, comprenant en outre une interface de gestion adaptée pour recevoir une instruction pour sélectionner ledit premier ensemble de paramètres de dispositif d'annulation de diaphonie parmi un groupe d'ensembles pré-stockés de paramètres de dispositif d'annulation de diaphonie.

16. Appareil de terminaison de ligne (100) selon l'une quelconque des revendications 9-15, comprenant en outre une interface de gestion adaptée pour recevoir une instruction spécifiant des coefficients d'atténuation et de couplage de diaphonie constituant ledit premier ensemble de paramètres de dispositif d'annulation de diaphonie.

17. Programme pour un processeur d'un élément d'équipement de terminaison de ligne (100) présentant un dispositif d'annulation de diaphonie, le programme comprenant des instructions pour exécuter le procédé selon l'une quelconque des revendications 1-8.

FIG. 1

100

101
102
103
104

110

120

131
132
133
134

EP 2 388 983 B1

Configure precoder with
1st set of parameters — 210

Transmit 1st signal from
DSLAM to CPEs — 220

Receive error component
information — 230

Calculate 2nd set of precoder
parameters from received error
component information — 240

Calculate 3rd set of precoder
parameters from 1st set and 2nd set — 250

Reconfigure precoder with
3rd set of parameters — 260

Transmit 2nd signal form
DSLAM to CPEs — 270

Compare received 2nd signal with
original (uncoded) 2nd signal — 280

FIG. 2

```
┌─────────────────────────────────┐  310
│  Configure precoder with        │ ⟋
│  1st set of parameters          │
└─────────────────────────────────┘
                │
                ▼
┌─────────────────────────────────┐  320
│  Transmit 1st signal from       │ ⟋
│  CPEs to DSLAM                  │
└─────────────────────────────────┘
                │
                ▼
┌─────────────────────────────────┐  330
│  Receive error component        │ ⟋
│  information                    │
└─────────────────────────────────┘
                │
                ▼
┌─────────────────────────────────┐  340
│  Calculate 2nd set of precoder  │ ⟋
│  parameters from received error │
│  component information          │
└─────────────────────────────────┘
                │
                ▼
┌─────────────────────────────────┐  350
│  Calculate 3rd set of precoder  │ ⟋
│ parameters from 1st set and 2nd set│
└─────────────────────────────────┘
                │
                ▼
┌─────────────────────────────────┐  360
│  Reconfigure precoder with      │ ⟋
│  3rd set of parameters          │
└─────────────────────────────────┘
                │
                ▼
┌─────────────────────────────────┐  370
│  Transmit 2nd signal form       │ ⟋
│  CPEs to DSLAM                  │
└─────────────────────────────────┘
                │
                ▼
┌─────────────────────────────────┐  380
│  Compare received 2nd signal with│ ⟋
│  original (uncoded) 2nd signal  │
└─────────────────────────────────┘
```

FIG. 3

**EP 2 388 983 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1998465 A1
- EP 2056548 A1
- US 20050030884 A1